**Europäisches Patentamt**

**European Patent Office**

**Office européen des brevets**

(19)

(11) Veröffentlichungsnummer: **0 184 783**
**B1**

(12) # EUROPÄISCHE PATENTSCHRIFT

(45) Veröffentlichungstag der Patentschrift:
**27.04.88**

(51) Int. Cl.⁴: **F 16 L 21/06**, F 16 L 33/04

(21) Anmeldenummer: **85115504.4**

(22) Anmeldetag: **06.12.85**

(54) Vorrichtung zum abgedichteten Verbinden der glattzylindrischen Enden zweier Rohre.

(30) Priorität: **12.12.84 DE 3445297**

(43) Veröffentlichungstag der Anmeldung:
**18.06.86 Patentblatt 86/25**

(45) Bekanntmachung des Hinweises auf die Patenterteilung:
**27.04.88 Patentblatt 88/17**

(84) Benannte Vertragsstaaten:
**AT BE CH DE FR GB IT LI NL SE**

(56) Entgegenhaltungen:
**DE-A-3 339 169**
**FR-A-2 287 638**
**GB-A-2 004 939**

(73) Patentinhaber: **MENGERING Sanitär- Haustechnik GmbH, Winterhäuser Strasse 22, D-8700 Würzburg (DE)**

(72) Erfinder: **Klingelhöfer, Ulrich, Neubaustrasse 7, D-8702 Waldbüttelbrunn (DE)**

**Beschreibung**

Die Erfindung bezieht sich auf eine Vorrichtung zum abgedichteten Verbinden der glattzylindrischen Enden zweier Rohre mit einer durch ein Schellenband kontraktierbaren Dichtmanschette, wobei das Schellenband an seinen beiden Enden mit nach außen abgewinkelten Stegen versehen ist, die Öffnungen zur Aufnahme wenigstens einer Schraube zum Spannen des Schellenbandes aufweisen.

Bei einer bekannten Vorrichtung der obigen Bauart weist das Schellenband über seine gesamte axiale Länge einen kreisrunden Querschnitt auf und die nach außen abgewinkelten Stege sind durch angeschweißte Stahlplatten verstärkt, welche die beim Anziehen der Spann-Schraube erzeugten Zugkräfte am Fuß der Stege in das Schellenband einleiten.

Die Verstärkungsplatten bilden zusätzliche Bauteile und die Schweißbefestigung erfordert einen zusätzlichen Arbeitsgang sowie die Verwendung eines qualitativ hochwertigen Edelstahls für das Schellenband als Sicherung gegen interkristalline Korrosion.

Der Erfindung liegt die Aufgabe zugrunde, die Spann-Schraube(n) am Schellenband versenkt anzuordnen, um die Zugkräfte günstiger auf das Schellenband zu übertragen, so daß auf die bisher erforderlichen Verstärkungsplatten verzichtet werden kann und somit auch deren Schweißbefestigung entfällt.

Gemäß der Erfindung wird diese Aufgabe dadurch gelöst, daß jeder Steg sich mit einem Abschnitt in eine Vertiefung am Schellenband erstreckt, auf welche die Öffnungen zur Aufnahme der Spann-Schraube ausgefluchtet sind, und daß diese Öffnungen derart radial nach innen versetzt sind, daß die Achse der Spann-Schraube eine seitliche Verlängerung des Außenumfangs des Schellenbandes mindestens tangiert. Man erreicht durch diese "versenkte" Anordnung der Spann-Schraube oder Spann-Schrauben bei deren Anziehen eine im Vergleich zum Stand der Technik günstigere Einleitung der Zugkräfte in das Schellenband, so daß die bisher erforderliche Verstärkung der Stege und der zur Befestigung derselben notwendige Schweißvorgang entfallen kann. Der Stegbereich des Schellenbandes ist dadurch gegenüber dem Stand der Technik einfacher ausgebildet und für das Schellenband kann ein kostengünstigerer Werkstoff eingesetzt werden. Außerdem nimmt diese Rohr-Verbindung weniger Einbauplatz in Anspruch.

Nach einer Weiterbildung der Erfindung ist die Anordnung der Öffnungen in den Stegen zur Aufnahme der Spann-Schraube so getroffen, daß der größte Teil der Achse der Spann-Schraube radial innerhalb einer seitlichen Verlängerung des Außenumfangs des Schellenbandes liegt.

Noch eine andere Ausgestaltung der Erfindung sieht bei Verwendung eines an sich bekannten Schellenbandes mit einer umlaufenden Nut vor, daß deren Endbereiche die Vertiefungen am Schellenband bilden, in welche sich die Stege mit einem Abschnitt erstrecken.

Die Erfindung wird anschließend anhand der Zeichnungen von zwei Ausführungsbeispielen erläutert. Es zeigen:

Fig. 1 eine Draufsicht auf einen Teil der Verbindungsvorrichtung im Bereich der Stege am Schellenband mit einer eingebauten Spann-Schraube;

Fig. 2 einen Längsschnitt entlang der Linie A - A in Fig. 1;

Fig. 3 einen Querschnitt entlang der Linie B-B in Fig. 1;

Fig. 4 eine Draufsicht auf eine Vorrichtung ähnlich Fig. 1, jedoch mit einem modifizierten Schellenband;

Fig. 5 einen Längsschnitt entlang der Linie A-A in Fig. 4 und

Fig. 6 einen Querschnitt entlang der Linie B-B in Fig. 4.

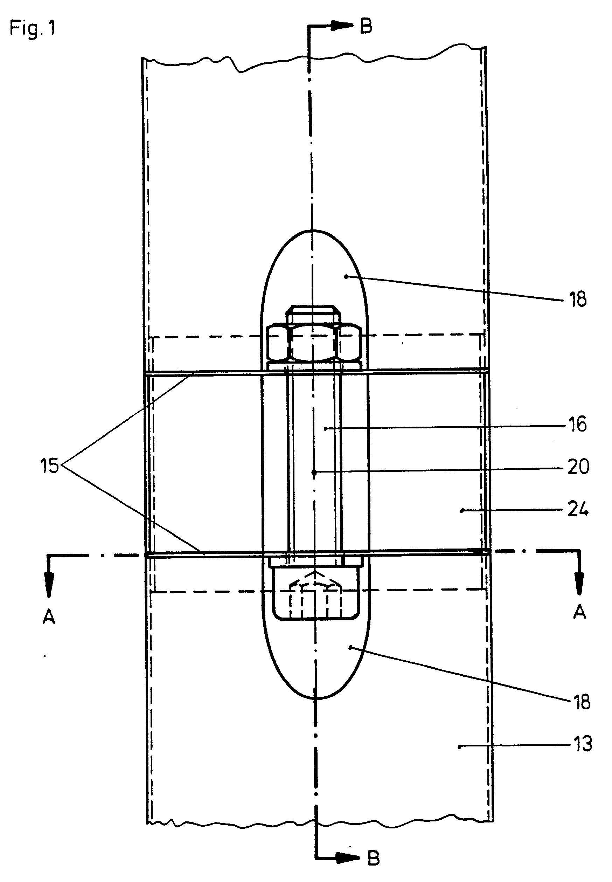

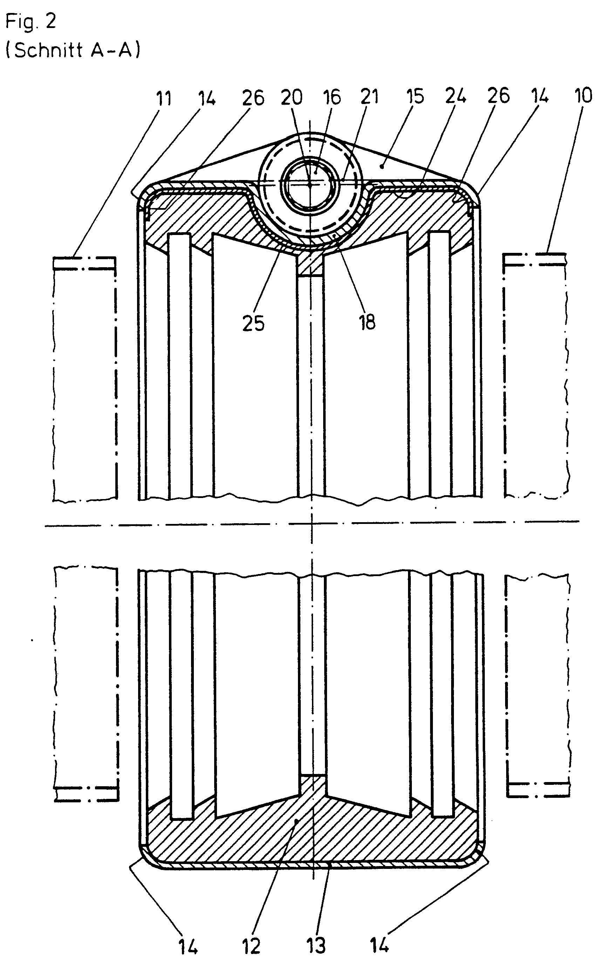

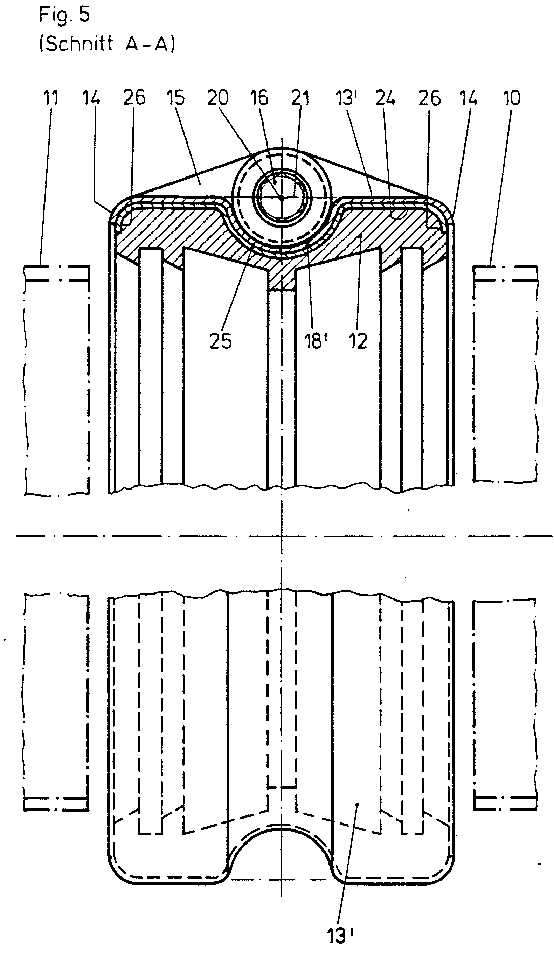

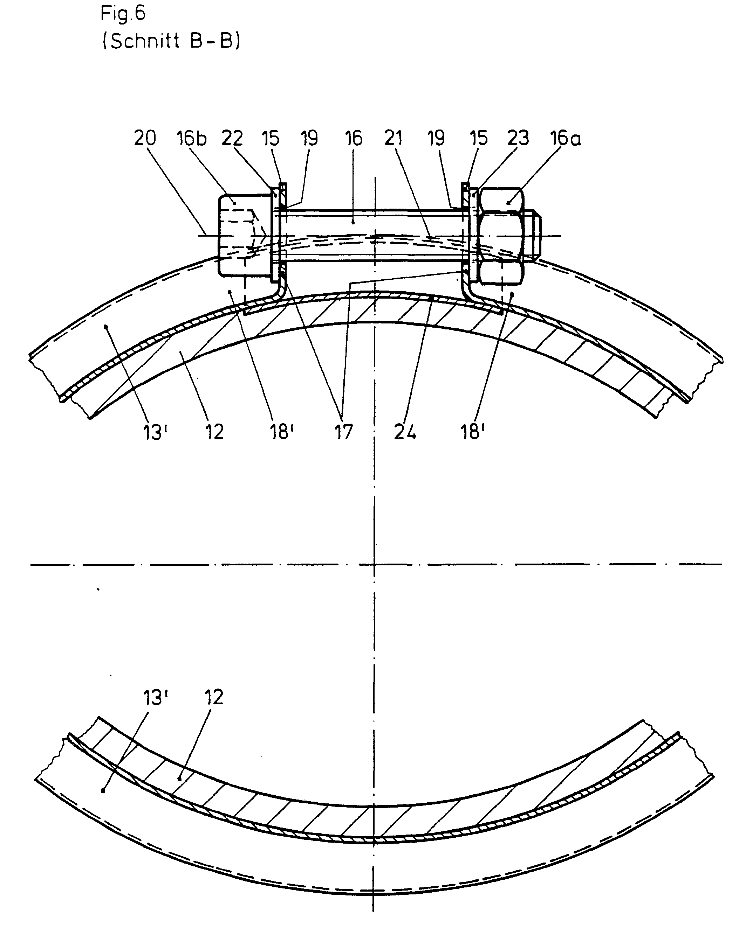

Die in den Figuren 1 - 3 bzw. 4 - 6 abgebildeten Vorrichtungen dienen zur abgedichteten Verbindung der glattzylindrischen Enden 10 bzw. 11 von zwei Rohren, z. B. Abwasserrohren aus Stahl oder Gußeisen. Die Vorrichtungen enthalten zu diesem Zweck je eine Dichtmanschette 12 aus elastomerem Material und ein Schellenband 13 bzw. 13' aus Edelstahl, welches mit abgebogenen Rändern 14 die Dichtmanschette 10 seitlich etwas übergreift.

Bei beiden Versionen sind die Enden des Schellenbandes 13 bzw. 13' nach außen abgewinkelt, um Stege 15 zu bilden, die durch eine Schraube 16 gegeneinander bewegt werden können, um die Dichtmanschette 12 zu kontraktieren und damit gegen den Außenumfang der eingesteckten Rohrenden 10, 11 zu pressen.

Jeder Steg 15 erstreckt sich mit einem Abschnitt 17 beim Ausführungsbeispiel nach den Figuren 1 - 3 in eine muldenförmige Vertiefung 18 am Schellenband 13. Diese muldenförmigen Vertiefungen 18 sind in der Mitte des Schellenbandes 13 angeordnet, sind jeweils am Steg 5 am tiefsten und werden dann von den Stegen 15 weg in entgegengesetzter Umfangsrichtung des Schellenbandes 13 immer flacher.

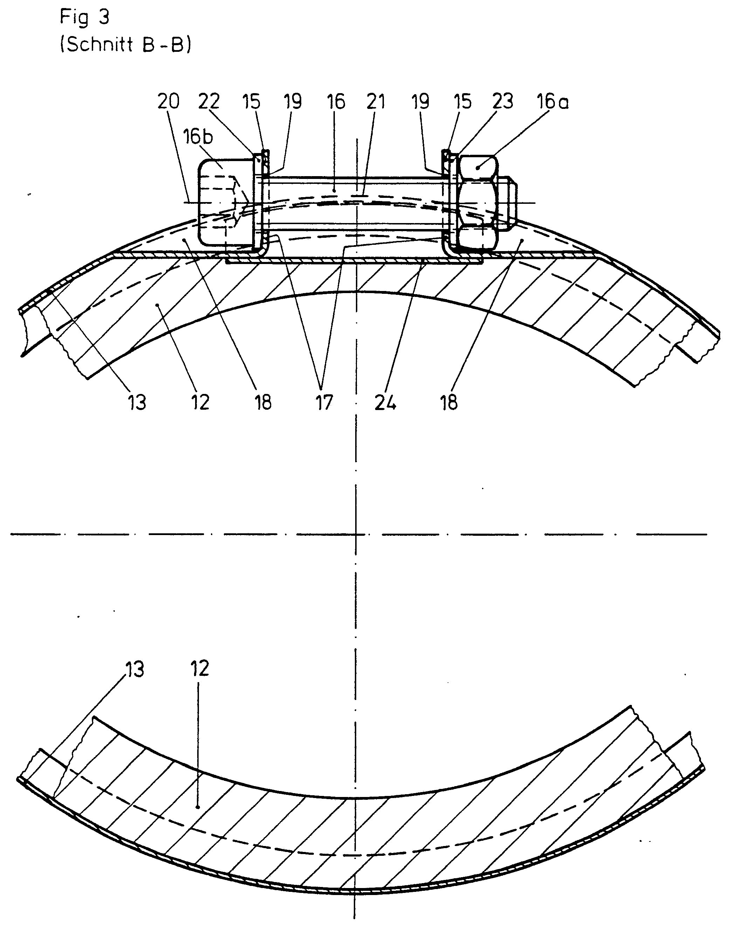

Die Spann-Schraube 16 erstreckt sich mit ihrem Schaft durch Öffnungen 19 in den beiden Stegen 15 des Schellenbandes 13, welche auf die Vertiefungen 18 ausgefluchtet und so weit radial nach innen versetzt sind, daß, wie aus Fig. 3 hervorgeht, der größte Teil der Achse 20 der Spann-Schraube 16 radial innerhalb einer seitlichen Verlängerung 21 des Außenumfangs des Schellenbandes 13 liegt. Die Spann-Schraube 16 ist dadurch am Schellenband 13 "versenkt" angeordnet. Bei der Spann-Schraube 16 handelt es sich um eine Innen-Sechskantschraube mit aufgedrehter Mutter 16a. Zwischen dem Kopf 16b der Spann-Schraube 16 und der Außenseite des linken Stegs (Fig. 3) 15 ist eine Beilagscheibe 22 und zwischen der Mutter 16a und der Außenseite des rechten Stegs 15 ist ein Federring 23 angeordnet.

Der Spalt zwischen den stegen 15 des Schellenbandes 13 wird durch eine Zunge 24 überbrückt, welche (verg. Fig. 3) das Schellenband 13 im Bereich der Stege 15 untergreift. Der Querschnitt dieser Zunge 24 ist demjenigen des Schellenbandes 13 im Bereich der Stege 15 angepaßt, was bedeutet, daß auch die Zunge 24 eine muldenartige Vertiefung und seitlich abgebogene Ränder 26 aufweist. Diese Zunge 24 kann entweder lose eingelegt, am Schellenband 13 mit einem Ende eingehakt oder an einem Ende mit dem Schellenband oder über ihre Bogenlänge mit der Dichtmanschette 12 durch Klebung verbunden sein.

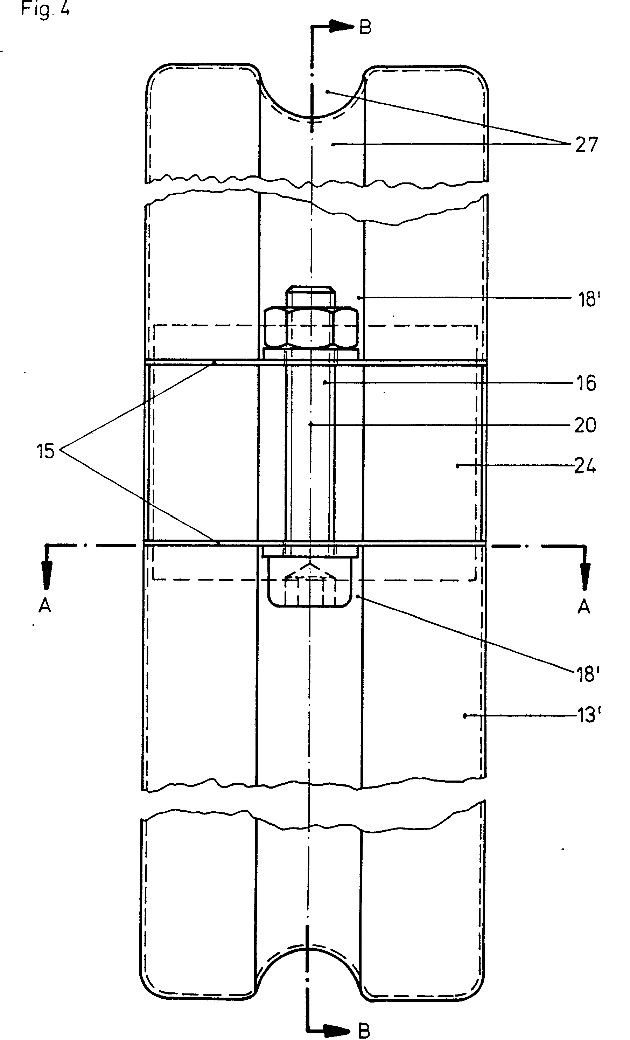

Beim Ausführungsbeispiel nach den Figuren 4 - 6 sind die muldenartigen Vertiefungen 18', in welche sich die Abschnitte 17 der Stege 15 erstrecken, durch die Endbereiche einer am Schellenband 13' umlaufenden Nut 27 gebildet. In Abweichung vom Ausführungsbeispiel nach den Figuren 1 - 3 sind hier ferner die Durchtrittsöffnungen 19 für die Spann-Schraube 16 nur so weit radial nach innen versetzt, daß die Achse 20 der Spann-Schraube 16 eine seitliche Verlängerung 21 des Außenumfangs des Schellenbandes 13 tangiert. Im übrigen sind gleiche Teile mit denselben Bezugszahlen wie beim Ausführungsbeispiel nach den Figuren 1- 3 bezeichnet.

Zum abgedichteten Verbinden der glattzylindrischen Rohrenden 10, 11 werden bei beiden Ausführungsbeispielen die Rohre in die Dichtmanschette 12 eingesteckt und dann wird die Spann-Schraube 16 angezogen. Dadurch werden die Stege 15 gegeneinander bewegt und das Schellenband 13 gespannt, welches wiederum die Dichtmanschette 12 kontraktiert und gegen den Außenumfang der eingesteckten Rohrenden 10, 11 preßt.

Beide Versionen werden ferner fabrikmäßig vorgefertigt und als sogenannte Steckverbinder auf die Baustelle geliefert. In Abweichung von den gezeigten Ausführungsbeispielen können auch mehrere Spann-Schrauben 16 in der oben geschilderten Art und Weise "versenkt" im Schellenband 13 angeordnet sein, was von der axialen Länge des Steckverbinders abhängig ist.

**Patentansprüche**

1. Vorrichtung zum abgedichteten Verbinden der glattzylindrischen Enden zweier Rohre mit einer durch ein Schellenband kontraktierbaren Dichtmanschette, wobei das Schellenband an seinen beiden Enden mit nach, außen abgewinkelten Stegen versehen ist, die Öffnungen zur Aufnahme wenigstens einer Schraube zum Spannen des Schellenbandes aufweisen, dadurch gekennzeichnet, daß jeder Steg (15) sich mit einem Abschnitt (17) in eine Vertiefung (18) am Schellenband (13) erstreckt, auf welche die Öffnungen (19) zur Aufnahme der Spann-Schraube (16) ausgefluchtet sind, und daß diese Öffnungen (19) derart radial nach innen versetzt sind, daß die Achse (20) der Spann-Schraube (16) eine seitliche Verlängerung (21) des Außenumfangs des Schellenbandes (13) mindestens tangiert.

2. Vorrichtung nach Anspruch 1, dadurch gekennzeichnet, daß die Anordnung der Öffnungen (19) in den Stegen (15) zur Aufnahme der Spann-Schraube (16) so getroffen ist, daß der größte Teil der Achse (20) der Spann-Schraube (16) radial innerhalb einer seitlichen Verlängerung (21) des Außenumfangs des Schellenbandes (13) liegt.

3. Vorrichtung nach Anspruch 1 oder 2, dadurch gekennzeichnet, daß bei Verwendung eines an sich bekannten Schellenbandes (13') mit einer umlaufenden Nut (27) deren Endbereiche die Vertiefungen (18') am Schellenband (13') bilden, in welche sich die Stege (15) mit einem Abschnitt (17) erstrecken.

**Claims**

1. Device for the sealed connection of the smooth cylindrical ends of two pipes with a sealing sleeve which can be contracted by a clamping band, wherein the clamping band is provided, at its two ends with outwardly turned lugs, which have openings for receiving at least one screw for tensioning the clamping band, characterised in that each lug (15) extends with a section (17) in a recess (18) in the clamping band (13), into which flow the openings (19) for receiving the clamping screw (16), and in that these openings (19) are so displaced radially inwardly that the axis (20) of the clamping screw (19) is at least tangential to a lateral prolongation (21) of the outer periphery of the clamping band (13).

2. Device according to claim 1 characterised in that the arrangement of the openings (19) in the lugs (15) for receiving the clamping screw (16) is such that the greatest part of the axis (20) of the clamping screw (16) lies radially inside a lateral prolongation (21) of the outer periphery of the clamping band (13).

3. Device according to claim 1 or 2, characterised in that, with the use of a clamping band (13') with a peripheral groove (27), known per se, the end regions thereof form the recesses (18') in the clamping band (13') in which the lugs (15) extend with a section (17).

**Revendications**

1. Dispositif d'assemblage étanche de deux tuyaux à extrémités cylindriques lisses, comportant un manchon d'étanchéité comprimable au moyen d'un collier de fixation, celui-ci étant pourvu à ses deux extrémités de pattes repliées vers l'extérieur qui comportent des ouvertures pour le logement d'au moins une vis servant à serrer le collier de fixation, caractérisé en ce qu'une partie (17) de chaque patte (15) trouve place dans un évidement (18) du collier de fixation (13), évidement sur lequel sont alignées les ouvertures (19) pour le logement des vis de serrage (16), et en ce que ces ouvertures (19) sont décalées radialement vers l'intériéur de manière que l'axe (20) des vis de serrage (16) tangente au moins un prolongement latéral (21) du périmètre extérieur du collier de fixation (13).

2. Dispositif selon la revendication 1, caractérisé en ce que l'agencement des ouvertures (19) dans les pattes (15) pour le logement de la vis de serrage (16) est réalisé de telle sorte que la plus grande partie de l'axe (20) de la vis de serrage (16) se situe radialement à l'intérieur d'un prolongement latéral (21) du périmètre extérieur du collier de fixation (13).

3. Dispositif selon la revendication 1 ou 2, caractérisé en ce que l'on utilise un collier de fixation (13') connu, comportant une rainure périphérique (27) dont les zones terminales constituent les évidements (18') du collier de serrage (13'), dans lesquels trouve place une partie (17) des pattes (15).

Fig. 1

18

16

20

24

15

18

13

B

A

A

B

Fig. 2
(Schnitt A-A)

Fig 3
(Schnitt B - B)

Fig. 4

0 184 783

B

27

18'

16

20

24

15

A · · · A

18'

13'

7 → B

Fig. 5
(Schnitt A - A)

Fig.6
(Schnitt B-B)